# EUROPEAN PATENT SPECIFICATION

(11) **EP 2 045 493 B1**
(45) Date of publication and mention of the grant of the patent: **18.09.2013**
(21) Application number: 08165595.3
(22) Date of filing: 01.10.2008
(51) Int. Cl.: F16K 27/00, F16L 37/14, F16L 5/02

(54) **Interconnection system, particularly for valve devices**
Verbindungssystem, insbesondere für Ventilvorrichtungen
Système d'interconnexion, en particulier pour des dispositifs à valve

(30) Priority: 02.10.2007 IT TO20070693
(43) Date of publication of application: 08.04.2009
(73) Proprietor: ELBI International S.p.A., 10129 Torino (IT)
(72) Inventor: Da Pont, Paolo, 10123 Torino (IT); Aita, Luigi, 10090 GASSINO TORINESE (Torino) (IT); Daudo, Franco, 10146 Torino (IT)
(74) Representative: Quinterno, Giuseppe

(56) References cited:
- EP-A1- 0 571 247
- FR-A1- 2 411 352
- GB-A- 2 143 468

## Description

The present invention relates in a general way to a system for forming interconnections between bodies, and more specifically to a system for simultaneously interconnecting a first and a second body and a plate, and particularly for connecting a connector to a tubular portion of a valve body and to a fixing plate, of the type in which the first body can be inserted into the second body in a predetermined direction of connection, and can be placed in a specified relative position therein. A similar connection is e.g. shown in document GB 2143468.

There is a known type of valve device comprising a body with at least one aperture in which a corresponding connector is fixed, by screwing for example. It is sometimes necessary to secure such valve devices to a fixing and supporting plate, typically made from metal, inside equipment such as a wall-mounted boiler for a domestic heating system.

The valve body is generally connected to the fixing and supporting plate by means of a plurality of screws.

The whole process of connecting a connector to the valve body and then connecting the valve body together with its connector to a fixing and supporting plate requires a plurality of sequential operations and the use of a multiplicity of connecting and fixing means.

One object of the present invention is to propose a structurally simplified interconnection system which enables two bodies and a plate to be interconnected simultaneously in an extremely rapid way, thus overcoming the drawbacks of the designs currently in use.

This and other objects are achieved according to the invention with an interconnection system comprising:
an aperture formed in the plate, into which the first body can be inserted in the aforesaid direction of connection and in which this body can be placed in a predetermined relative position in which an axial portion of this body is transversely confined and locked in said aperture;
a channel formed in the periphery of the first body in a direction which forms an angle with said direction of connection;
a retaining formation created in the second body along a direction forming an angle with said direction of connection;
retention and guide means associated with the plate, for defining a direction of sliding substantially parallel to said plate, and
at least one interlock member which can be inserted slidably into the retention and guide means of the plate and which has a first and a second longitudinal profile which can engage slidably, respectively, in the channel of the first body and with the retaining formation of the second body when the first body is placed in the specified relative position in the second body and in the aperture of the plate, in such a way that said first and second bodies are fixed together axially and transversely and are also fixed to the plate.

Other features and advantages of the invention will be made clear by the following detailed description, provided purely by way of non-limiting example, with reference to the appended drawings, in which:
Figure 1 is a partial perspective view of a valve unit in which an interconnection system according to the present invention is used;
Figure 2 shows a fixing and supporting plate for use in an interconnection system according to the invention;
Figure 3 shows a connector for use in a system according to the invention;
Figure 4 is a partial perspective view showing part of the plate of Figure 2;
Figure 5 is a partial perspective view showing the connector of Figure 3 placed in a predetermined relative position in an aperture of the plate according to Figure 4;
Figure 6 is a partial perspective view showing a portion of a valve body placed in a specified relative position with respect to the connector and to the plate of Figure 5;
Figure 7 is a perspective view of an embodiment of an interlock member included in an interconnection system according to the invention;
Figure 8 is a perspective view similar to that of Figure 6, and shows an interconnection member according to Figure 7 in a step preceding its connection to the plate, the connector and the neck of the valve body, which have been placed in the specified relative position for interconnection;
Figure 9 is a perspective view showing the interlock member in its operating position, in which it secures the connector and the valve body to each other and to the fixing and support plate;
Figure 10 is a partial perspective view on an enlarged scale, showing the procedures for connecting a branch of the interlock member to the connector and to the fixing and supporting plate; and
Figure 11 is a partial sectional view taken substantially along the line XI-XI of Figure 1.

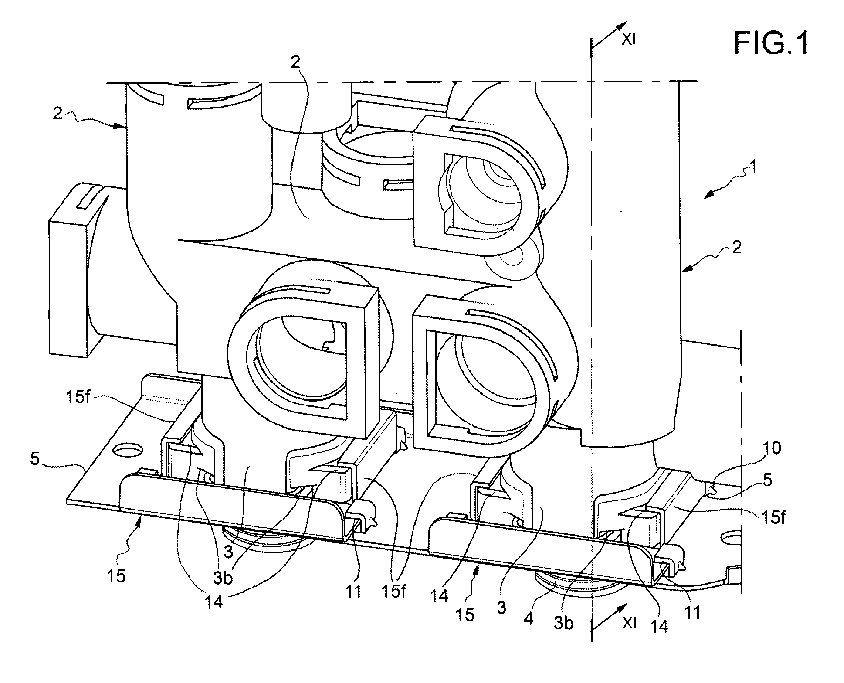

In Figure 1, the number 1 indicates the whole of a valve unit for use in a wall-mounted boiler of a domestic hot water production and/or heating system.

The valve unit 1 comprises a body 2, made from metal or plastics material for example, having a pair of lower tubular portions or necks 3. Each neck 3 is connected to a corresponding tubular connector 4.

The valve unit 1 is fixed stably to a fixing and supporting plate, indicated as a whole by 5.

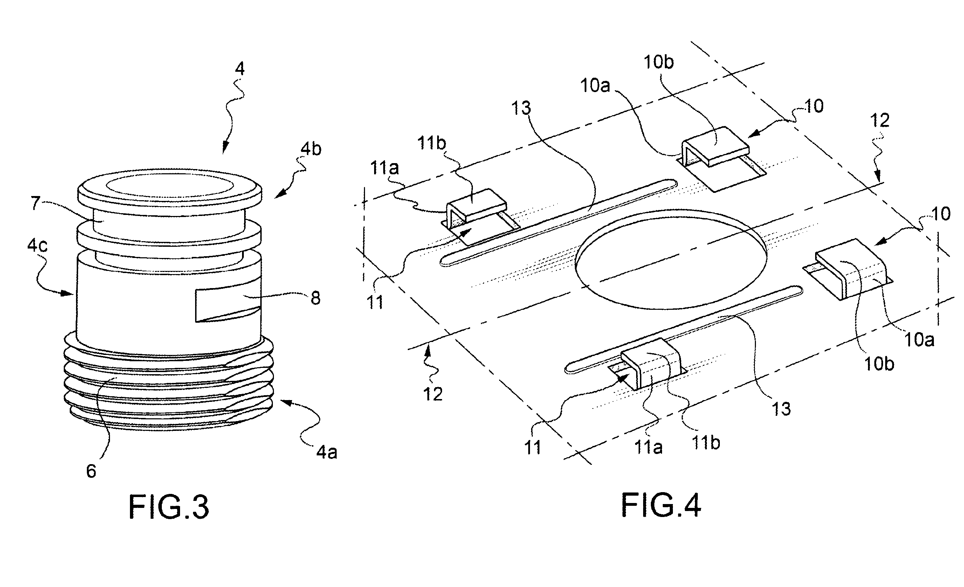

With reference to Figure 3, each connector 4 has an end 4a provided with a thread 6, for connection to other devices and/or circuits. The opposite end 4b of the connector 4 is intended to be inserted into the corresponding tubular portion or neck 3 of the valve body 2, and has an outer circumferential channel 7, intended to receive a toroidal sealing ring (not shown).

Each connector 4 has an axially intermediate portion 4c in which two parallel flat-bottomed channels 8 are formed on opposite sides.

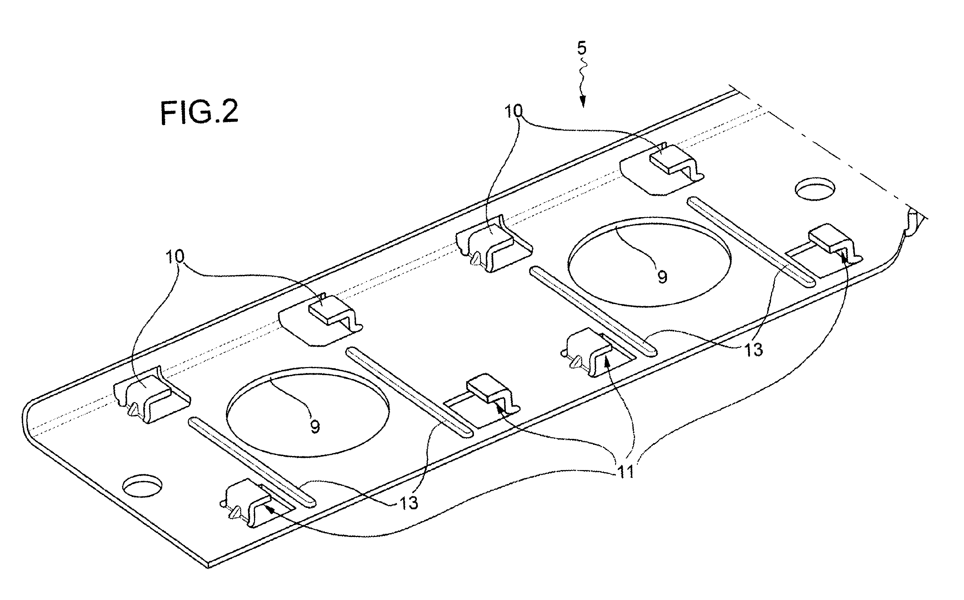

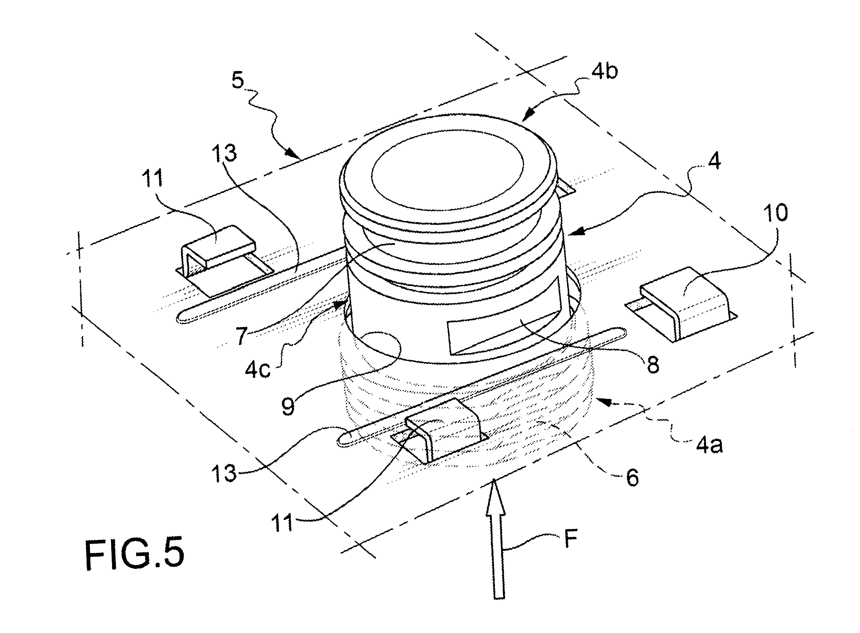

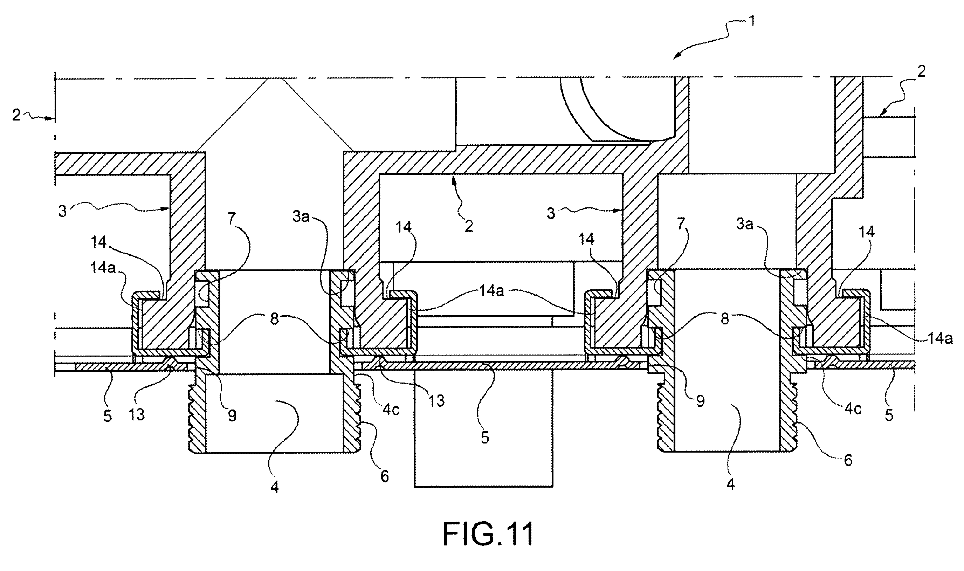

With reference to Figures 2, 4 and 5, for each connector 4 of the valve unit 1 the fixing and supporting plate 5 has a corresponding aperture 9 which, in the illustrated non-limiting example, has a circular shape, with a diameter substantially equal to or slightly greater than the diameter of the intermediate portion 4c of the corresponding connector. Each connector 4 can be inserted into the corresponding aperture 9 of the plate 5, in the direction indicated by the arrow F in Figure 5, and can be placed with its intermediate portion 4c in this aperture 9, in such a way that said portion 4c, and consequently the whole connector 4, is then transversely confined and locked in said aperture (Figures 5 and 11).

As shown, for example, in Figures 2 and 4, two pairs of retention and guide elements 10 and 11 are formed around an aperture 9 in the plate 5. These pairs of retention elements are in mirror symmetry with each other about a diametric direction of the associated aperture, indicated by 12. The members 10 and 11 are made by cutting and bending operations, and each of them is substantially L-shaped, with a portion 10a rising from the general plane of the plate 5, and a substantially horizontal raised portion 10b parallel to this plane. Similarly, the retention and guide members 11 are substantially L-shaped, each having an essentially vertical portion 11a and a horizontal raised portion 11b (Figure 4).

In the embodiment shown by way of example, the members 10 and 11 of each pair are not exactly aligned with each other in a direction parallel to the direction 12 of Figure 4, the retention members 11 being transversely offset towards the outside with respect to the similarly shaped retention members 10. This offsetting is not essential, however, and the scope of the invention also includes embodiments in which the retention members 10 and 11 of each pair are aligned with each other.

Two rectilinear projections, indicated by 13 in Figures 2, 4 and 5, are also conveniently formed near the aperture 9, or each aperture 9, of a fixing and supporting plate 5. These projections extend upwards from the part of the plate 5 from which the retention members 10 and 11 also project. The projections 13 are also preferably parallel to the diametric direction indicated by 12 in Figure 4.

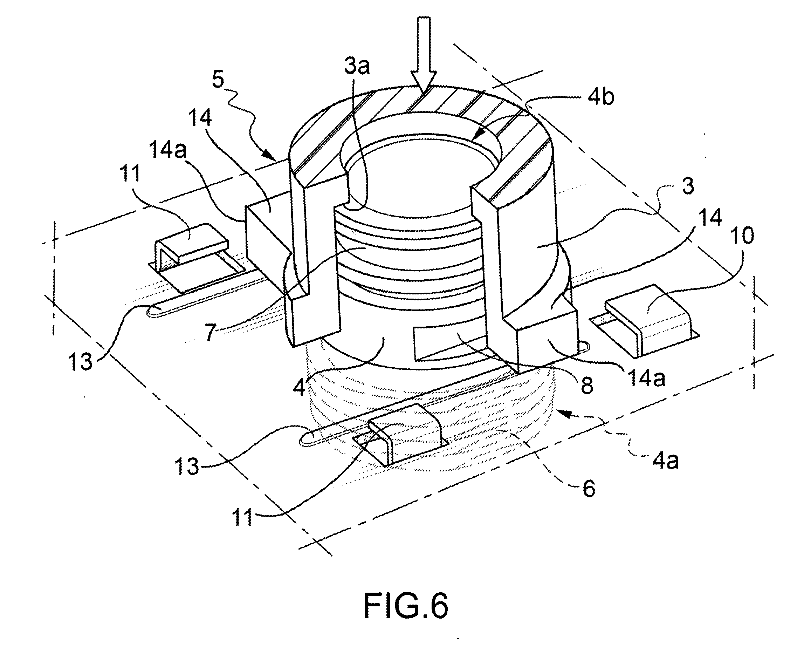

With reference to Figures 6 and 11, each tubular portion or neck 3 of the valve body 2 has a stop shoulder 3a formed inside it, the upper end of the associated connector 4 bearing against this shoulder in the course of assembly.

Additionally, as shown for example in Figures 6, 8 and 9, each tubular portion or neck 3 has a pair of external retention formations 14, with corresponding flat terminal surfaces 14a which are substantially parallel to each other (Figures 6, 8 and 9).

The interconnection system according to the invention provides for the use of an interlock member, such as that indicated as a whole by 15 in Figure 1 and Figures 7 to 9, for connecting each neck 3 and the associated connector 4 to the plate 5.

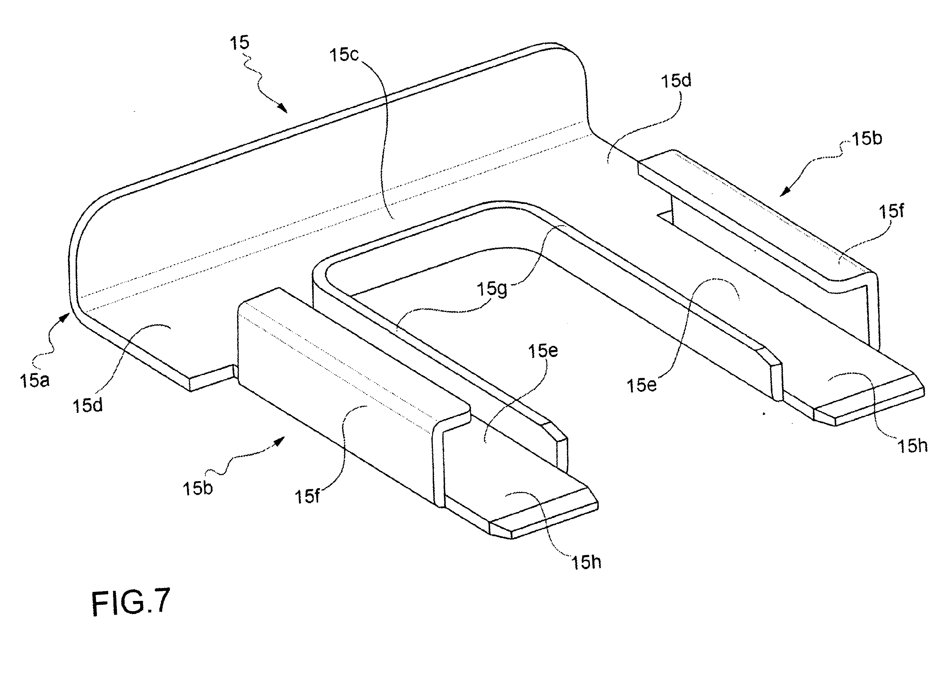

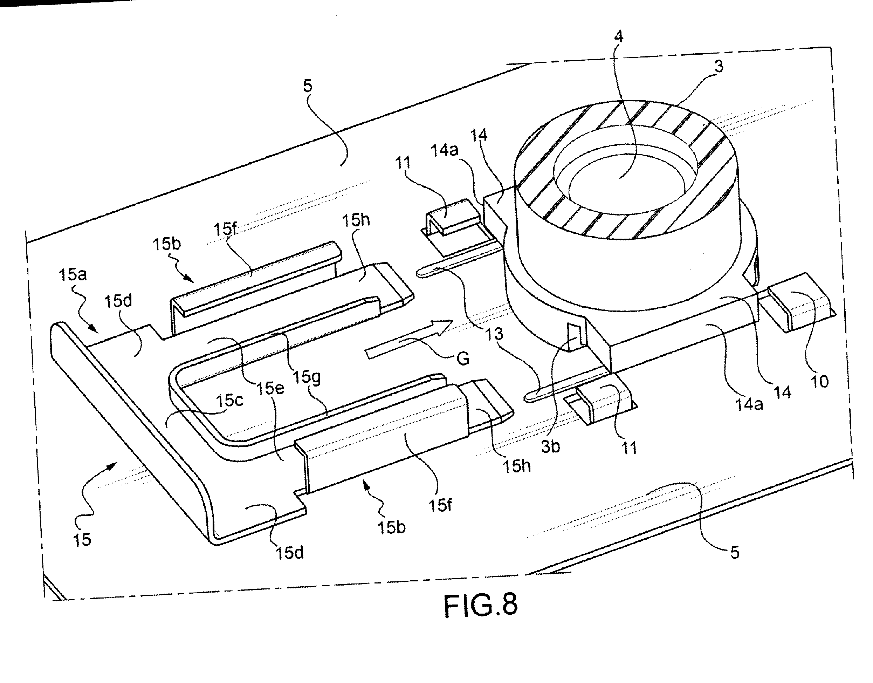

With particular reference to Figures 7 and 8, in the illustrated embodiment the interlock member 15 is made from a single piece of sheet metal which is cut and bent, and comprises a cross-piece 15a with a substantially L-shaped profile. Two parallel branches 15b, in mirror symmetry with each other, extend from this cross-piece.

With reference to Figures 7 and 8, the cross-piece 15a of the interlock member 15 has a horizontal flange 15c whose opposite ends 15d project transversely outwards beyond the branches 15b.

Each of the branches 15b has a horizontal portion 15e which is coplanar with the horizontal flange 15c of the cross-piece 15a. The parallel longitudinal sides of the horizontal portions 15e are connected by bent portions to corresponding outer profiles 15f, having inverted L-shaped cross sections, and to inner profiles 15g in the form of vertical walls. The height of the inner profiles 15g is lower than that of the outer profiles 15f.

With reference to Figures 7 and 8, each of the horizontal portions 15e of the two branches of the interlock member has a remote end 15h, these remote ends projecting longitudinally beyond the lateral profiles 15f and 15g.

The interconnection system described above is used in the following way.

With reference to Figure 5, a connector 4 is inserted through a corresponding aperture 9 of the plate 5 in the direction of the arrow F, in such a way that its intermediate portion 4c, with the lateral channels 8, protrudes above this plate. The connector 4 is also orientated in such a way that its lateral channels 8 are placed substantially parallel to the diametric direction 12 (Figure 4) of the aperture 9, in other words parallel to the projections 13 of the plate 5.

With reference to Figure 6, the connector 4 is then connected to a corresponding neck 3 of the valve body 1. In particular, the valve body is positioned in such a way that the neck 3 is orientated as shown in Figure 6, in other words with its retaining formations 14 placed parallel to the corresponding channels 8 of the connector 4.

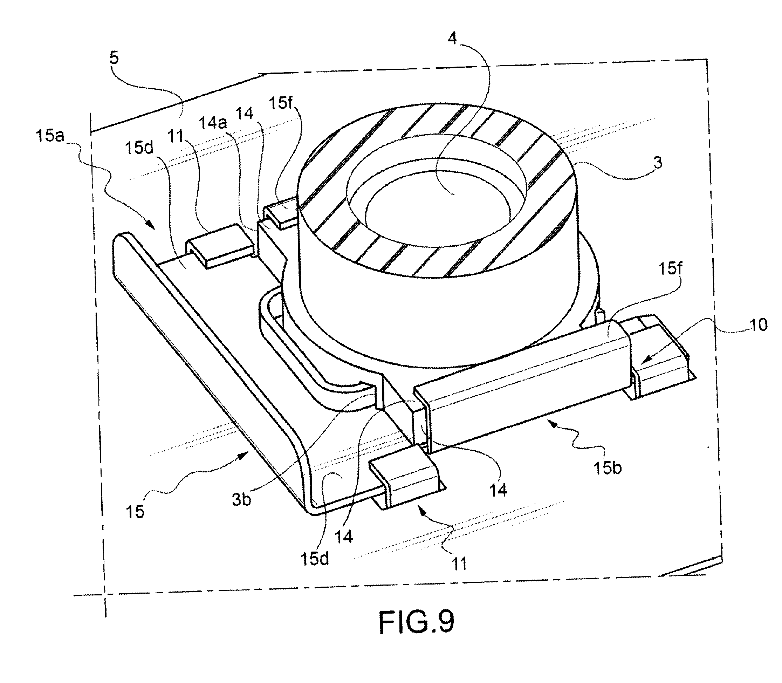

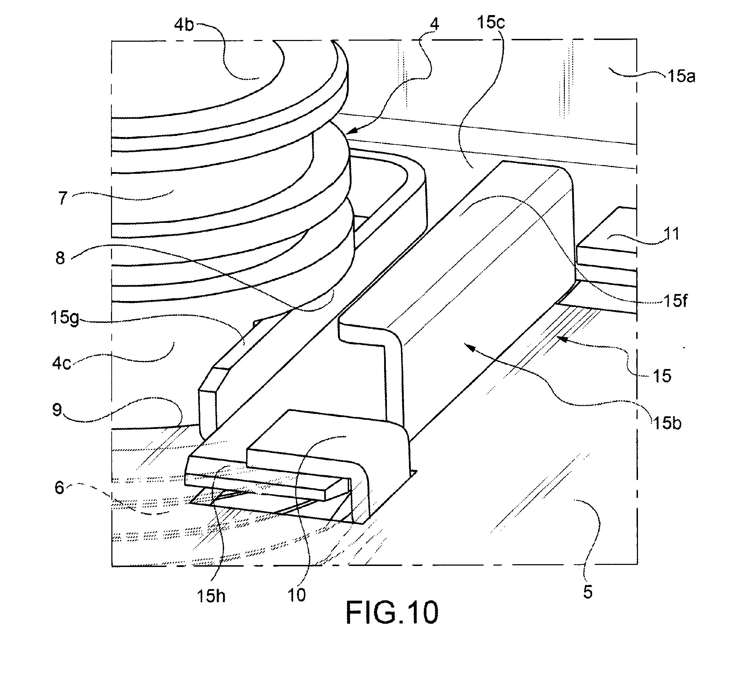

The connection between the neck 3 of the valve body, the connector 4 and the plate 5 is then secured by means of an interlock member 15 which, as shown in Figure 8, is connected to said members by a longitudinal sliding movement along the plate 5, in the direction of the arrow G. As a result of this movement, the outer profiles 15f of the interlock member 15 fit closely around the retaining formations 14 of the neck 3, as shown in Figure 9. The inner profiles of the two branches of the interlock member 15 pass through the openings 3b of the neck 3 and slide, preferably with a small degree of friction, into the channels 8 of the connector 4, as implied by Figure 9, and as shown more fully in Figures 10 and 11.

With reference to Figures 9 and 10, the transverse edges 15d and longitudinal edges 15h of the interlock member 15 are closely coupled to the associated retention members 10 and 11 of the plate 5. The connection between the interlock member 15 and said retention members 10 and 11 is also made tight by the presence of the projections 13 of the plate 5, on which the interlock member 15 slides in its connecting movement.

When the interlock member has reached the operating position shown in Figure 1 and Figures 9 to 11, the connector 4 is securely fixed to the neck 3 of the valve body, and both of these are securely fixed to the fixing and support plate 5.

As shown in Figures 1 and 11, a single interlock member 15 can conveniently be provided for each neck 3 of the valve body 1 and for the associated connector 4. Alternatively, it is possible to provide a single interlock member which can connect a plurality of necks of the valve body and the associated connectors 4 to the plate 5 at the same time.

Clearly, the connection system according to the invention is structurally simple, and its use is extremely rapid and convenient.

Although in the preceding description and in the drawings to which it refers the interlock member is substantially shaped in the form of a fork with two branches, it would also be possible to provide an adequate interconnection between a neck, the associated connector and the interconnection plate by means of a simplified interlock element, substantially in the form of one half of the interlock member 15 described above, in other words comprising only one of the two branches 15b.

Naturally, the principles of the invention remaining the same, the forms of embodiment and in particular the details of construction may be varied widely with respect to those described and illustrated purely by way of a non-limiting example, without thereby departing from the scope of the invention as defined by the appended claims.

## Claims

1. A system for simultaneously interconnecting a first and a second body (4, 3) and a plate (5), particularly for connecting a connector (4) to a tubular portion (3) of a valve body (2) and to a fixing plate (5), in which the first body (4) can be inserted into the second body (3) in a predetermined direction of connection and can be placed in a specified relative position therein, the system comprising
an aperture (9) which is formed in the plate (5) and into which the first body (4) can be inserted in said direction of connection (F) and in which this body can be placed in a predetermined relative position, in which an axial portion (4c) of this body is transversely confined and locked in said aperture (9);
a channel (8) formed in the periphery of the first body (4) in a direction which forms an angle with said direction of connection (F);
a retaining formation (14) created in the second body (3) along a direction forming an angle with the direction of connection (F);
retention and guide means (10, 11) associated with said plate (5), for defining a direction of sliding (G) substantially parallel to said plate (5), and
at least one interlock member (15) which can be inserted slidably into the retention and guide means (10, 11) of the plate (5) and which has a first and a second longitudinal profile (15g, 15f) which can engage slidably, respectively, in the channel (8) of the first body (4) and with the retaining formation (14) of the second body (3) when the first body (4) is placed in the specified relative position in the second body (3) and in the aperture (9) of the plate (5), in such a way that said first and second bodies (4, 3) are fixed together axially and transversely and are fixed to the plate (5).

2. An interconnection system according to Claim 1, in which two substantially parallel channels (8) are formed in the periphery of the first body (4) on opposite sides, and two parallel retaining formations (14) are correspondingly formed in the second body (3) on opposite sides, and in which the interlock member (15) is substantially shaped in the form of a fork and has a pair of arms or branches (15b), each of which has a first and a second longitudinal profile (15g, 15f) which can engage slidably, respectively, in a channel (8) of the first body (4) and with a corresponding retaining formation (14) of the second body (3).

3. An interconnection system according to Claim 1 or 2, in which the aforesaid retention and guide means (10, 11) of the plate (5) comprise at least one pair of substantially L-shaped retention members (10, 11), each of which can retain a corresponding longitudinal appendage (15h) or transverse appendage (15d) of the interlock member (15).

4. A system according to any one of the preceding claims, in which the interlock member is made in a single piece of sheet metal which is cut and bent.

## Patentansprüche

1. System zum simultanen Verbinden eines ersten und eines zweiten Körpers (4, 3) sowie einer Platte (5), insbesondere zum Verbinden eines Steckers (4) an einen rohrförmigen Abschnitt (3) eines Ventilkörpers (2) und an eine Befestigungsplatte (5), in dem der erste Körper (4) in eine vorherbestimmte Verbindungsrichtung in den zweiten Körper (3) eingeführt und darin in eine bestimmte Relativposition platziert werden kann, wobei das System folgendes aufweist:
eine Öffnung (9), die in der Platte (5) ausgebildet ist und in die der erste Körper (4) in die Verbindungsrichtung (F) eingeführt werden kann sowie in die der Körper in eine vorherbestimmte Relativposition platziert werden kann, in die ein Axialabschnitt (4c) dieses Körpers in Querrichtung begrenzt und in der Öffnung (9) gesichert ist;
einen Kanal (8), der an der Seite des ersten Körpers (4) in einer Richtung ausgebildet ist, die einen Winkel mit der Verbindungsrichtung (F) ausbildet;
eine Halteanordnung (14), die in dem zweiten Körper (3) entlang einer Richtung geschaffen ist, die einen Winkel mit der Verbindungsrichtung (F) ausbildet;
eine Halte- und Führungseinrichtung (10, 11), die mit der Platte (5) in Verbindung sind, um eine im Wesentlichen zu der Platte (5) parallele Schieberichtung (G) zu definieren, und
mindestens ein Arretierungselement (15), das verschiebbar in die Halte- und Führungseinrichtung (10, 11) der Platte (5) eingeführt werden kann und das ein erstes und ein zweites längliches Profil (15g, 15f) hat, die jeweils in den Kanal (8) des ersten Körpers (4) und mit der Halteanordnung (14) des zweiten Körpers (3) verschiebbar eingreifen können, wenn der erste Körper (4) in der bestimmten Relativposition in dem zweiten Körper (3) und in der Öffnung (9) der Platte (5) platziert ist, auf eine solche Art und Weise, dass der erste und zweite Körper (4, 3) in Axial- und Querrichtung miteinander befestigt sind sowie an der Platte (5) befestigt sind.

2. Verbindungssystem nach Anspruch 1, in das zwei im Wesentlichen parallele Kanäle (8) an der Seite des ersten Körpers (4) an entgegengesetzten Seiten ausgebildet sind und zwei parallele Halteanordnungen (14) entsprechend in dem zweiten Körper (3) an entgegengesetzten Seiten ausgebildet sind und in dem das Arretierungselement (15) im Wesentlichen in der Form einer Gabel ausgebildet ist und ein Paar Arme oder Anschlussstutzen (15b) hat, von denen jeder ein erstes und ein zweites längliches Profil (15g, 15f) hat, die jeweils in einen Kanal (8) des ersten Körpers (4) und mit der entsprechenden Halteanordnung (14) des zweiten Körpers (3) verschiebbar eingreifen können.

3. Verbindungssystem nach Anspruch 1 oder 2, in dem die genannte Halte- und Führungseinrichtung (10, 11) der Platte (5) mindestens ein Paar von im Wesentlichen L-förmigen Halteelementen (10, 11) aufweist, wobei jedes davon einen entsprechenden länglichen Fortsatz (15h) oder in Querrichtung verlaufenden Fortsatz (15d) des Arretierungselements (15) halten kann.

4. System nach einem der vorhergehenden Ansprüche, in dem das Arretierungselement aus einem einzigen Blechstück hergestellt ist, das geschnitten und gebogen ist.

## Revendications

1. Système permettant d'interconnecter simultanément un premier et un deuxième corps (4, 3) et une plaque (5), en particulier pour connecter un connecteur (4) à une partie tubulaire (3) d'un corps de vanne (2) et à une plaque de fixation (5), dans lequel le premier corps (4) peut être inséré dans le deuxième corps (3) dans une direction de connexion prédéterminée et peut y être placé dans une position relative imposée, le système comprenant :
une ouverture (9) qui est formée dans la plaque (5) et dans laquelle le premier corps (4) peut être inséré dans ladite direction de connexion (F) et dans laquelle ce corps peut être placé dans une position relative prédéterminée, dans laquelle une partie axiale (4c) de ce corps est confinée transversalement et bloquée dans ladite ouverture (9) ;
un canal (8) formé dans la périphérie du premier corps (4) dans une direction qui forme un angle avec ladite direction de connexion (F) ;
une structure de retenue (14) créée dans le deuxième corps (3) le long d'une direction qui forme un angle avec la direction de connexion (F) ;
un moyen de retenue et de guidage (10, 11) associé à ladite plaque (5), pour définir une direction de glissement (G) substantiellement parallèle à ladite plaque (5), et
au moins un élément de verrouillage (15) qui peut être inséré de façon glissante dans le moyen de retenue et de guidage (10, 11) de la plaque (5) et qui a un premier et un deuxième profil longitudinal (15g, 15f) qui peuvent s'engager de façon glissante respectivement dans le canal (8) du premier corps (4) et avec la structure de retenue (14) du deuxième corps (3) quand le premier corps (4) est mis dans la position relative imposée dans le deuxième corps (3) et dans l'ouverture (9) de la plaque (5), de telle manière que lesdits premier et deuxième corps (4, 3) sont fixés ensemble axialement et transversalement et sont fixés à la plaque (5).

2. Système d'interconnexion selon la revendication 1, dans lequel deux canaux substantiellement parallèles (8) sont formés dans la périphérie du premier corps (4) sur des côtés opposés, et deux structures de retenue parallèles (14) sont formées de façon correspondante dans le deuxième corps (3) sur des côtés opposés, et dans lequel l'élément de verrouillage (15) a substantiellement la forme d'une fourche et comporte une paire de bras ou branches (15b), chacune d'entre elles ayant un premier et un deuxième profil longitudinal (15g, 15f) qui peuvent s'engager de façon glissante respectivement dans un canal (8) du premier corps (4) et avec une structure de retenue correspondante (14) du deuxième corps (3).

3. Système d'interconnexion selon la revendication 1 ou 2, dans lequel ledit moyen de retenue et de guidage (10, 11) de la plaque (5) comprend au moins une paire d'éléments de retenue substantiellement en forme de L (10, 11), chacun d'entre eux pouvant retenir un appendice longitudinal (15h) ou un appendice transversal (15d) correspondant de l'élément de verrouillage (15).

4. Système selon l'une quelconque des revendications précédentes, dans lequel l'élément de verrouillage est fait d'une seule pièce de tôle qui est coupée et courbée.
